# FASCICULE DE BREVET EUROPEEN

(11) **EP 0 888 724 B1**
(45) Date de publication et mention de la délivrance du brevet: **08.10.2003**
(21) Numéro de dépôt: 98201619.8
(22) Date de dépôt: 15.05.1998
(51) Int. Cl.: A23P 1/00, A23L 1/40, A23P 1/02

(54) **Aide culinaire de type granité**
Gerautes Küchenhilfsmittel
Marbled culinary aid

(30) Priorité: 04.07.1997 EP 97202062
(43) Date de publication de la demande: 07.01.1999
(73) Titulaire: SOCIETE DES PRODUITS NESTLE S.A., 1800 Vevey (CH)
(72) Inventeur: Mahe, Yannick, 60000 Beauvais (FR); Guillain, Valérie, 60000 Beauvais (FR)
(74) Mandataire: Wavre, Claude-Alain

(56) Documents cités:
- EP-A- 0 490 082
- EP-A- 0 594 152
- EP-A- 0 780 058
- BE-A- 738 503
- US-A- 4 060 645
- US-A- 4 946 693

## Description

La présente invention a pour objet un aide culinaire de type granité, un procédé pour sa préparation et une installation pour la mise en oeuvre du procédé.

US-A-4060645 (Risler et al.) décrit un produit déshydraté sous forme de grains instantanément solubles dans l'eau qui présentent une texture poreuse continue et une surface lisse que l'on peut obtenir en extrudant dans une enceinte où règne une pression subatmosphérique une matière alimentaire comprenant des extraits de fruits, légumes ou graines, des amidons, gommes ou alginates, des extraits de viande, poisson ou levure, et/ou des hydrolysats de protéines, par exemple.

US-A-4946693 (Risler et al.) décrit un produit alimentaire constitué d'une masse déshydratée sous forme de poudre ou de paillettes de lait, graisses, amidon gélatinisé, extraits de viande et légumes ou hydrolysats de protéines, par exemple, et d'une garniture de morceaux de pâtes, viande ou légumes partiellement déshydratés, par exemple, cette garniture étant conditionnée séparément.

La présente invention a pour but de proposer un aide culinaire sous une forme attractive présentant dans sa masse des morceaux visuellement identifiables de légumes, viande ou autre garniture, de la matière grasse et/ou un polysaccharide et des ingrédients sapides pulvérulents, par exemple.

A cet effet, l'aide culinaire de type granité selon la présente invention présente la forme d'un ensemble d'agglomérats et comprend 8-50% en poids d'éléments visuels, 15-35% d'agent liant et 20-70% d'ingrédients sapides. De préférence, cet aide culinaire est présenté en sachet dose.

De même, le procédé de préparation d'un aide culinaire de type granité selon la présente invention comprend les étapes successives et/ou concomitantes de mélange des éléments visuels avec l'agent liant et les ingrédients sapides, d'émiettage éventuel du mélange obtenu et de refroidissement ou séchage du mélange éventuellement émietté. De préférence, les étapes d'émiectage éventuel et de refroidissement ou séchage sont concomitantes.

Enfin, l'installation pour la mise en oeuvre du procédé de préparation d'un aide culinaire de type granité selon la présente invention comprend un dispositif de mélange des éléments visuels avec l'agent liant et les ingrédients sapides, un dispositif d'émiettage du mélange obtenu, et un dispositif de refroidissement ou de séchage.

L'aide culinaire de type granité selon la présente invention présente donc effectivement dans sa masse, sous une forme attractive d'ensemble d'agglomérats, des morceaux visuellement identifiables de légumes, viande ou autre garniture, à côté d'un agent liant tel qu'une matière grasse et/ou un polysaccharide par exemple, et d'ingrédients sapides pulvérulents.

Le procédé et l'installation selon la présente invention permettent de préparer cet aide culinaire de type granité d'une manière simple et en un nombre limité d'étapes.

Dans le présent exposé, l'expression "en forme d'ensemble d'agglomérats" est à comprendre comme présentant une forme d'ensemble de petits agglomérats de taille variable, notamment de 0,5-5 mm, de couleurs diverses, composés d'éléments visuels, d'agents liants et d'ingrédients sapides.

L'expression "éléments visuels" est à comprendre comme éléments dont la taille est suffisamment grande et la couleur suffisamment contrastée par rapport à celle de l'ensemble pour être distingués à l'oeil nu.

L'expression "agent liant" est à comprendre comme agent assurant la cohésion des différents composants au sein même des agglomérats.

Dans l'aide culinaire de type granité selon la présente invention, les éléments visuels peuvent être des morceaux déshydratés de tout produit alimentaire pouvant entrer en considération comme garniture.

Ces éléments visuels peuvent être en particulier des morceaux d'un ou plusieurs légumes, fruits, herbes aromatiques, viandes, poissons et/ou crustacés, des épices et/ou des graines entières ou concassées, par exemple.

L'agent liant peut être choisi parmi les matières grasses et/ou les polysaccharides, par exemple.

Si l'agent liant est une matière grasse, celle-ci peut comprendre au moins une graisse végétale et/ou une graisse animale, de préférence hydrogénée, additionnée ou non d'un agent antioxydant, choisie de manière à ne pas conférer un caractère gras au toucher à température ambiante, mais fondant aisément à une température supérieure à 100°C, par exemple.

Si l'agent liant est un polysaccharide, il peut être choisi parmi les amidons, maltodextrines, gommes ou alginates, par exemple.

Les ingrédients sapides peuvent comprendre des matières alimentaires sous forme finement subdivisée choisies en fonction de leur aptitude à conférer à l'aide culinaire de type granité une sapidité adéquate, par exemple. De préférence, ces matières alimentaires ne sont pas ou que peu grasses et elles présentant une teneur en matière grasse inférieure à environ 20%, généralement même inférieure ou égale à quelques %, par exemple.

Ces ingrédients sapides peuvent comprendre en particulier des agents aromatisants tels que sucres, sels, épices, extraits de fruits, légumes ou viandes, hydrolysats de protéines, autolysats de levure, produits de la réaction de Maillard ou molécules aromatiques, des agents exhausteurs de goût tels que des 5'-nucléotides et/ou du glutamate, par exemple.

Le procédé de préparation d'un aide culinaire de type granité selon la présente invention comprend donc les étapes successives et/ou concomitantes de mélange des éléments visuels avec l'agent liant et les ingrédients sapides, d'émiettage éventuel du mélange obtenu et de refroidissement ou séchage du mélange éventuellement émietté.

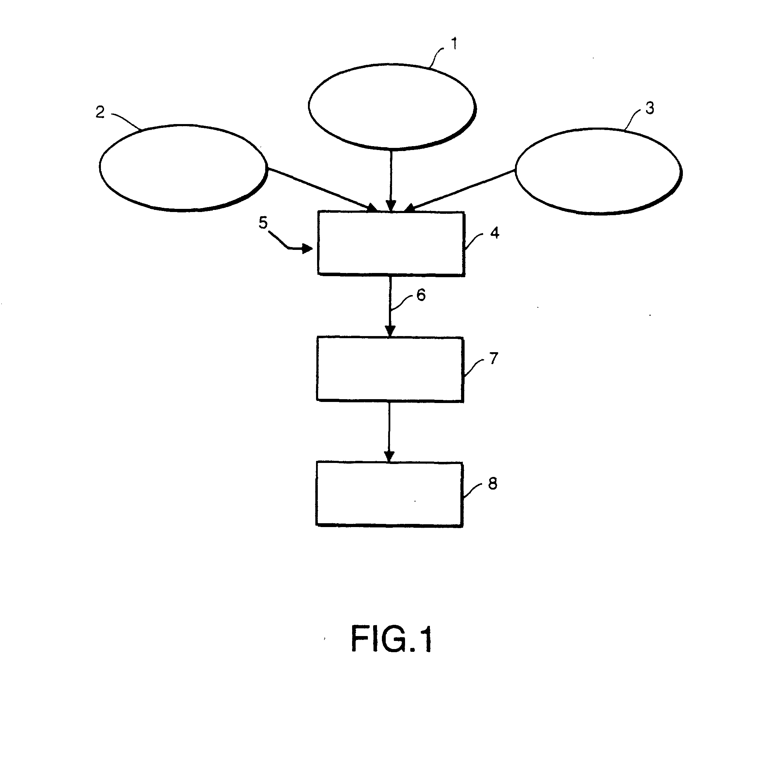

Si l'agent liant est une matière grasse (agent liant hydrophobe) et que l'étape de mélange permette d'obtenir directement, sans émiettage, l'ensemble d'agglomérats désiré, on peut mettre en oeuvre un procédé simplifié tel qu'illustré, à titre d'exemple, à la Figure 1 du dessin annexé.

Dans ce procédé simplifié, on peut mélanger les éléments visuels (1), l'agent liant fondu (2) et les ingrédients sapides (3) dans un dispositif de mélange (4) tel qu'un mélangeur à ruban, et l'on peut refroidir tout en poursuivant le mélange, notamment par injection d'azote liquide (5), par exemple.

L'ensemble d'agglomérats ainsi obtenu peut être ensaché en sachets dose à l'aide d'une ensacheuse verticale (8), après une éventuelle période d'attente en trémie de stockage (7) thermostatée sous agitation, dans laquelle le mélangeur peut être déchargé par basculement (6), par exemple.

Si la nature des composants à mélanger est telle que l'étape de mélange ne permette pas d'obtenir l'ensemble d'agglomérats désiré, on prévoit donc une étape d'émiettage consécutive au mélange.

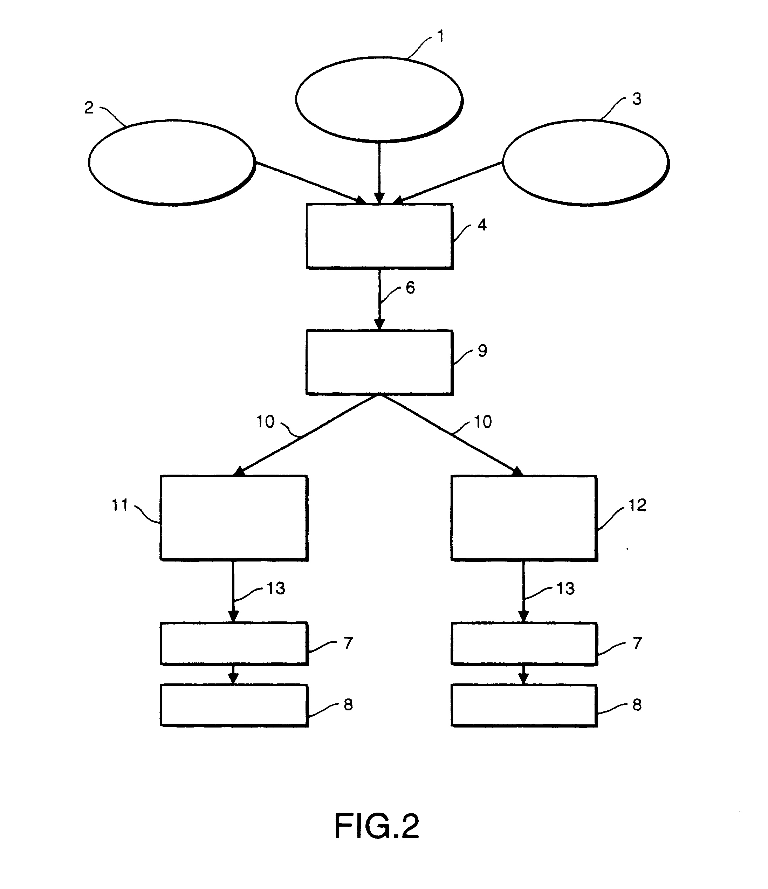

Pour mettre en oeuvre un procédé non simplifié, comme on l'a illustré à titre d'exemple à la Figure 2 du dessin annexé, on peut mélanger les éléments visuels (1), l'agent liant (2) et les ingrédients sapides (3) dans un dispositif de mélange (4) tel au'un mélangeur à ruban, par exemple.

On peut ensuite émietter le mélange, notamment après avoir déchargé le mélangeur à ruban en le faisant basculer (6), à l'aide d'un dispositif d'émiettage comprenant une herse rotative, par exemple.

On peut alors transporter le mélange, à l'aide d'une bande ou tapis de transport (10), au travers d'un dispositif de refroidissement (11) tel qu'un tunnel de refroidissement à air ou azote si l'agent liant est une matière grasse (agent liant hydrophobe), ou au travers d'un dispositif de séchage (12) tel qu'un tunnel de séchage à air ou à rayonnement infrarouge si l'agent liant est un polysaccharide (agent liant hydrophile), par exemple.

On peut avantageusement prévoir de poursuivre l'émiettage à la sortie de ces tunnels, à l'aide d'une herse rotative par exemple.

L'ensemble d'agglomérats ainsi obtenu peut être ensaché en sachets dose à l'aide d'une ensacheuse verticale (8), après une éventuelle période d'attente en trémie de stockage (7) thermostatée sous agitation, dans laquelle l'ensemble d'agglomérats peut avoir été transporté à l'aide d'une bande ou tapis de transport (13), par exemple.

Dans ce procédé non simplifié, si l'agent liant est une matière grasse, on réalise de préférence l'étape du mélange en deux phases dans un mélangeur à ruban comportant une double enveloppe, notamment selon le mode opératoire suivant:
- préparation d'un ciment en introduisant dans la matière grasse liquide, portée notamment à une température de 60-75°C, la totalité ou une partie des ingrédients sapides de façon à obtenir un ciment ayant une viscosité adaptée (devront être incorporés la totalité des pulvérulents et une partie des cristallins, ces derniers étant nécessaires à la bonne dispersion des premiers dans la matière grasse),
- introduction des visuels et du reste des cristallins dans ce ciment, durant un temps suffisant pour obtenir un mélange homogène, notamment en mélangeant durant 20 min, le pourcentage de matières grasses et la température finale du mélange étant ajustés de façon à obtenir une texture sableuse et des propriétés d'écoulement compatibles avec les étapes suivantes du procédé de fabrication, la température de la double enveloppe étant réglée en conséquence.

L'émiettage de la masse en sortie du mélangeur peut se faire à l'aide d'un dispositif d'émiettage comprenant une cuve de forme parallélépipèdique à double parois, à fond mobile et ouverte sur l'un des côtés. Le fond mobile peut être constitué d'un tapis reposant sur une sole à double enveloppe. Une herse peut assurer l'émiettage du mélange déposé dans la cuve et mu progressivement par le tapis.

Le mélange ainsi émietté peut être distribué de manière homogène sur un tapis de transport qui amène le produit jusqu'au tunnel de refroidissement. Dans ce tunnel, la matière grasse est alors figée, fixant ainsi la structure des agglomérats. On peut utiliser à cet effet un air déshumidifié et refroidi à une température d'environ 5°C, par exemple.

Par contre, dans le procédé simplifié, si l'agent liant est un polysaccharide, on réalise de préférence l'étape du mélange en deux ou trois phases, notamment selon le mode opératoire suivant:
- dispersion du ou des agents liants dans l'eau au moyen d'une turbine adaptée,
- introduction des autres ingrédients pulvérulents et de la totalité ou d'une partie des cristallins de façon à obtenir comme précédemment un ciment assez fluide, le mélange étant réalisé dans un mélangeur à rubans,
- introduction des visuels et du reste des cristallins dans ce ciment, durant un temps suffisant pour obtenir un mélange homogène, notamment en mélangeant durant environ 20 min, le pourcentage d'agents liants étant ajusté de façon à obtenir une texture sableuse et des propriétés d'écoulement compatibles avec les étapes suivantes du procédé de fabrication, la température n'étant pas ici un paramètre critique.

Les deux premières phases peuvent être regroupées si la dispersion des agents liants n'est pas problématique.

L'émiettage du mélange peut être effectué dans un dispositif similaire à celui décrit ci-dessus mais dans ce cas il n'est a priori plus nécessaire de disposer d'une cuve à double enveloppe.

Le mélange émietté est ensuite transféré vers un sécheur à air chaud à bande ou tambour rotatif. La température de l'air peut être modulée en fonction de l'activité d'eau du produit, notamment entre 50°C et 100°C.

## Revendications

1. Aide culinaire de type granité présentant la forme d'un ensemble d'agglomérats et comprenant 8-50% en poids d'éléments visuels, 15-35% d'agent liant et 20-70% d'ingrédients sapides.

2. Aide culinaire selon la revendication 1, présenté en sachet dose.

3. Procédé de préparation d'un aide culinaire de type granité selon la revendication 1, comprenant les étapes successives et/ou concomitantes de mélange des éléments visuels avec l'agent liant et les ingrédients sapides, d'émiettage éventuel du mélange obtenu et de refroidissement ou séchage du mélange éventuellement émietté.

4. Procédé selon la revendication 3, dans lequel les étapes d'émiettage éventuel et de refroidissement ou séchage sont concomitantes.

## Patentansprüche

1. Gekörnte Küchenhilfe in Form einer Menge von Agglomeraten, die 8-50 Gew.-% sichtbare Elemente, 15-35% Bindemittel und 20-70% Geschmackszutaten enthält.

2. Küchenhilfe nach Anspruch 1, die in einem Portionsbeutel vorliegt.

3. Verfahren zur Herstellung einer gekörnten Küchenhilfe nach Anspruch 1, umfassend die aufeinanderfolgenden und/oder gleichzeitigen Schritte des Mischens der sichtbaren Elemente mit dem Bindemittel und den Geschmackszutaten, ggf. des Zerbröselns der erhaltenen Mischung und des Kühlens oder Trocknens der ggf. zerbröselten Mischung.

4. Verfahren nach Anspruch 3, bei dem die Schritte des ggf. vorgenommenen Zerbröselns und des Kühlens oder Trocknens gleichzeitig stattfinden.

## Claims

1. Granular cooking aid which is in the form of a combination of aggregates and which comprises 8-50% by weight of visual components, 15-35% of binder and 20-70% of taste ingredients.

2. Cooking aid according to Claim 1, which is presented in a dose sachet.

3. Process for preparing a granular cooking aid according to Claim 1, comprising the successive and/or concomitant steps of mixing the visual components with the binder and the taste ingredients, optionally crumbling the mixture obtained and cooling or drying the optionally crumbled mixture.

4. Process according to Claim 3, in which the optional crumbling and cooling or drying steps are concomitant.
